# EUROPÄISCHE PATENTSCHRIFT

(11) **EP 1 561 559 B1**
(45) Veröffentlichungstag und Bekanntmachung des Hinweises auf die Patenterteilung: **18.07.2007**
(21) Anmeldenummer: 05000544.6
(22) Anmeldetag: 13.01.2005
(51) Int. Cl.: B29C 37/02, B29C 49/72

(54) **Vorrichtung zum Entfernen von Butzen von Hohlkörpern aus thermoplastischem Kunststoff**
Apparatus for removing flash from hollow thermoplastic articles
Appareil pour ébavurer des articles creux en matière thermoplastique

(30) Priorität: 07.02.2004 DE 102004006079
(43) Veröffentlichungstag der Anmeldung: 10.08.2005
(73) Patentinhaber: Friedrich H. Weischede Formenbau GmbH, 46242 Bottrop (DE)
(72) Erfinder: Schaub, Josef, 45964 Gladbeck (DE)
(74) Vertreter: von dem Borne, Andreas

(56) Entgegenhaltungen:
- DE-U1- 29 823 539
- US-A- 5 202 135
- DATABASE WPI Section Ch, Week 198006 Derwent Publications Ltd., London, GB; Class A32, AN 1980-10028C XP002328781 -& JP 54 161678 A (SHIKOKU KAKOKI CO LTD) 21. Dezember 1979 (1979-12-21)

## Beschreibung

Die Erfindung betrifft eine Vorrichtung zum Entfernen von im Zuge des Formens von Hohlkörpern aus thermoplastischem Kunststoff in einem Formwerkzeug an den geformten Hohlkörpern entstehenden Abfallteilen. Im Rahmen der Erfindung meint Hohlkörper z.B. Behälter, Kanister, Flaschen oder dergleichen mit z. B. Einfüllöffnung und/oder Griff. Es werden auch technische Formteile in Form von Hohlkörpern umfasst, z. B. aus dem Bereich der Automobiltechnik. Dabei kann es sich z. B. um Tanks, Ausgleichsbehälter oder sonstige Behälter für z. B. Bremsflüssigkeit oder Scheibenwischflüssigkeit handeln.

Im Zuge der Herstellung von Hohlkörpern aus thermoplastischen Kunststoffen erzeugt z.B. ein Extruder mit einem Blaskopf einen schlauchförmigen Vorformling, der dann in noch heißem Zustand von einem Formwerkzeug bzw. Blaswerkzeug umschlossen und durch mittels eines Blasdorns oder einer Blasdornnadel eingebrachter Druckluft aufgeweitet wird, so dass der betreffende Hohlkörper die Innenkontur des Blaswerkzeuges bzw. des Formwerkzeuges erhält. Dabei entstehen an den geformten Hohlkörpern Abfallteile bzw. Abfallstücke, die auch "Scrap", Butzen oder Grat bzw. Anguss bezeichnet werden und über verhältnismäßig dünne Materialstege bzw. Materialbrücken mit dem eigentlichen Hohlkörper verbunden sind. Im Zuge des Blasformens entstehen derartige Abfallteile beispielsweise im unteren Bereich des Behälters oder aber auch im oberen Bereich des Behälters, z.B. im Bereich oberhalb einer Behälterschulter oder oberhalb eines Griffes bzw. neben einem Griff als sog. Schulterabfalls. Ferner entstehen derartige Abfallteile im Bereich innerhalb eines Griffs als sog. Griffabfall.

Es ist aus der Praxis bekannt, derartige Abfallteile bzw. Abfallstücke mit Hilfe einer Stanzvorrichtung von dem geformten Hohlkörper zu trennen. Während es bei dem Abfall im unteren Bereich des Behälters möglich ist, die getrennten Abfallteile beispielsweise auf einem unterhalb des Behälters bzw. des Formwerkzeuges angeordneten Förderband zu sammeln, gelingt dieses bei dem im oberen Behälterbereich angeordneten Schulterabfall und auch bei dem im Griffbereich angeordneten Griffabfall regelmäßig nicht. Denn im Zuge des Trennens derartiger Abfallteile mit Hilfe einer Stanze fallen bzw. springen diese unkontrolliert von dem Behälter ab, so dass sie zum Zwecke der Wiederverwertung mit verhältnismäßig hohem Aufwand gleichsam aufgesammelt werden müssen. Durch das unkontrollierte Herabfallen bzw. Abspringen besteht ferner die Gefahr, dass die Abfallteile verschmutzt werden und somit nicht oder allenfalls nach einer aufwendigen Reinigung wieder verwendet werden können.

Ferner kennt man eine Vorrichtung zum Entfernen von Abfall-Reststücken von einem geblasenen Kunststoff-Hohlkörper, bei welcher eine thermische Energiequelle vorgesehen ist, mittels derer thermische Energie derart in die Materialbrücke zwischen Reststück und Hohlkörper einbringbar ist, dass durch Temperaturerhöhung das Kunststoffmaterial der Materialbrücke soweit erweicht wird, dass das Reststück ohne größeren Kraftaufwand von dem Hohlkörper abziehbar ist. Die thermische Energiequelle kann als Lufterhitzer bzw. Heißluftdüse ausgebildet sein. Das Entfernen des Abfallstücks selbst kann dabei mit einer Greiferzange erfolgen, welche das Reststück abreißt. Außerdem besteht die Möglichkeit, dass Reststück mit Hilfe von Drückelementen von dem Behälterkörper abzudrücken, so dass es dann in einen unteren Sammelbehälter fällt (vgl. DE 298 23 539 U1).

Aus der US 5 202 135 ist eine Vorrichtung zum Entfernen von im Zuge des Formens von Hohlkörpern aus thermoplastischem Kunststoff in einem Formwerkzeug an dem geformten Hohlkörper entstehenden Abfallteilen bekannt, wobei es sich bei den Abfallteilen um Griffabfall, Schulterabfall, Bodenabfall oder auch Abfallteile im Bereich der Behälteröffnung handeln kann. Der obere Schulterabfall und der Abfall im Bereich der Behälteröffnung werden mit einer Greifvorrichtung gleichsam abgerissen und dann auf eine Fördereinrichtung abgeworfen. Der Griffabfall wird mit Hilfe einer Stanzvorrichtung entfernt. Sofern er nicht ohnehin durch diesen Stanzvorgang von dem Behälter abfällt, wird er anschließend mit Hilfe von Druckluft entfernt.

Schließlich kennt man eine Vorrichtung zum Entfernen von Reststücken, welche im Zuge der Herstellung an einem Hohlkörper im oberen Bereich und im unteren Bereich entstehen, wobei zum Abtrennen dieser Abfallteile obere und untere Trennwerkzeuge in Form von Trennklingen vorgesehen sind. Der Hohlkörper selbst wird während des Abtrennens mit Hilfe einer Klammervorrichtung fixiert (vgl. JP 54-161678).

Der Erfindung liegt die Aufgabe zugrunde, einen Vorrichtung zum Entfernen von im Zuge des Formens von Hohlkörpern aus thermoplastischem Kunststoff an dem geformten Hohlkörper entstehenden Abfallteilen, insbesondere Schulterabfallteilen und Griffabfallteilen zu schaffen, welche einfach und funktionsgerecht aufgebaut ist und eine einwandfreie und kostengünstige Wiederverwertung der Abfallteile ermöglicht.

Zur Lösung dieser Aufgabe lehrt die Erfindung eine Vorrichtung zum Entfernen von im Zuge des Formens von Hohlkörpern aus thermoplastischem Kunststoff an den geformten Hohlkörpern entstehenden Abfallsteilen, insbesondere Schulterabfallteilen und Griffabfallteilen,
mit einer ersten Stanzvorrichtung mit zumindest einem Stanzarm zum Trennen eines außen am Hohlkörper angeordneten ersten Abfallteils, insbesondere Schulterabfallteils, von dem Hohlkörper,
mit einer ersten Aufnahmevorrichtung mit zumindest einem Aufnahmeelement zum Aufnehmen des abgetrennten ersten Abfallteils,
wobei das Aufnahmeelement der ersten Aufnahmevorrichtung und der Stanzarm der ersten Stanzvorrichtung zum Trennen und Aufnehmen des ersten Abfallteils gegeneinander verfahrbar sind,
sowie mit einer zweiten Stanzvorrichtung mit zumindest einem Stanzarm zum Trennen eines in einer Durchbrechung des Hohlkörpers angeordneten zweiten Abfallteils, insbesondere Griffabfallteils, von dem Hohlkörper,
mit einer zweiten Aufnahmevorrichtung mit zumindest einem Aufnahmeelement zum Aufnehmen des abgetrennten zweiten Abfallteils,
wobei der Stanzarm der zweiten Stanzvorrichtung schwenkbar gelagert und zum Trennen und Abgeben des Abfallteils an das Aufnahmeelement gegen das Abfallteil und das Aufnahmeelement der zweiten Aufnahmevorrichtung schwenkbar ist,
und ferner mit zumindest einer Sammel- und/oder Abführeinrichtung für die Abfallteile, an welche die Abfallteile von den Aufnahmevorrichtungen abgegeben werden.

Bei der Sammel- und/oder Abführvorrichtung für die abgetrennten Abfallteile kann es sich um einen unterhalb des Hohlkörper bzw. des Formwerkzeuges angeordneten Sammelbehälter bzw. Transportbehälter handeln. Vorzugsweise ist die Sammel- und/oder Abführvorrichtung aber als Förderband bzw. Transportband ausgebildet, welches die Abfallteile einerseits sammelt und andererseits kontinuierlich abfördert. Die Erfindung geht zunächst von der Erkenntnis aus, dass eine einwandfreie Wiederverwertung der abgetrennten Abfallteile dann möglich ist, wenn verhindert wird, dass die abgetrennten Abfallteile insbesondere der Schulterabfall und der Griffabfall unkontrolliert von dem Hohlkörper herabfallen bzw. abspringen. Dieses gelingt im Rahmen der Erfindung dadurch, dass nicht lediglich Stanzvorrichtungen mit Stanzelementen vorgesehen sind, welche das Abfallteil von dem Hohlkörper abtrennen, sondern darüber hinaus eine der jeweiligen Stanzvorrichtung zugeordnete Aufnahmevorrichtung mit einem Aufnahmeelement, welche das abgetrennte Abfallteil aufnimmt. Dazu sind zunächst einmal bei der ersten Aufnahmevorrichtung für den Schulterabfall das Aufnahmeelement und der Stanzarm gegeneinander verfahrbar. Gegeneinander verfahrbar meint im Rahmen der Erfindung, dass zumindest eines dieser Elemente gegen das jeweils andere Element verfahrbar ist, wobei dieses andere Element dann fest bzw. ortsfest angeordnet sein kann. Vorzugsweise sind aber beide Elemente verfahrbar ausgebildet bzw. angeordnet. Auch bei der zweiten Aufnahmevorrichtung kann ein Aufnahmeelement so in den Bereich des Abfallteils gebracht werden, dass der Stanzarm das Abfallteil im Zuge des Trennens von dem Hohlkörper an das Aufnahmeelement übergibt. Im Rahmen der Erfindung besteht somit die Möglichkeit, die abgetrennten Abfallteile auf einfache und zuverlässige Weise an die jeweiligen Aufnahmeelemente zu übergeben, wobei das Aufnahmeelement das Abfallteil vorübergehend aufnimmt und dann das Abfallteil gezielt an die Sammel- und/oder Abführvorrichtung abgibt. Dazu besteht die Möglichkeit, dass die Aufnahmeelemente derart verfahrbar ausgebildet sind, dass die (abgetrennten) Abfallteile anschließend in den Bereich der Sammel- und/oder Abführvorrichtung gebracht werden. Dann können die Abfallteile neben dem Hohlkörper abgegeben werden, wobei die Sammelvorrichtung unterhalb des Behälters so ausgebildet ist, dass sie beidseitig des Behälters abgeworfene Abfallteile auffängt. Jedenfalls wird ein unkontrolliertes Herabfallen oder Abspringen der Abfallteile von dem Hohlkörper im Zuge der Übergabe verhindert und damit eine einwandfreie Wiederverwertung ermöglicht.

Von besonderer Bedeutung ist dabei, dass die erfindungsgemäße Vorrichtung das kontrollierte und gleichsam kombinierte Entfernen verschiedener Abfallteile ermöglicht. Vorzugsweise handelt es sich dabei sowohl um Griffabfallteile als auch um Schulterabfallteile, die mit der erfindungsgemäßen Vorrichtung gleichzeitig oder nacheinander entfernt und abgeführt werden können. Es ist folglich nicht erforderlich, den zu bearbeitenden Hohlkörper nacheinander in unterschiedliche Bearbeitungsstationen zu überführen, in denen unterschiedliche. Abfallteile entfernt werden. Vielmehr gelingt dieses im Rahmen der Erfindung in einer einzigen, kombinierten Vorrichtung.

In besonders vorteilhafter Weiterbildung schlägt die Erfindung vor, dass die zweite Stanzvorrichtung und/oder die zweite Aufnahmevorrichtung mit der ersten Stanzvorrichtung und/oder der ersten Aufnahmevorrichtung gekoppelt sind. Dazu können beispielsweise die zweite Stanzvorrichtung und/ oder die zweite Aufnahmevorrichtung vollständig oder teilweise, mittelbar oder unmittelbar an die erste Stanzvorrichtung, z.B. an deren Stanzarm und/oder deren Stanzelement angeschlossen sein. Das bedeutet, dass die zweite Stanzvorrichtung und/oder die zweite Aufnahmevorrichtung, die für die Bearbeitung z.B. des Griffabfalls eingerichtet sind, vollständig oder zumindest teilweise mit dem ersten Stanzarm bzw. Stanzelement verfahrbar sind und folglich verfahren werden, wenn der erste Stanzarm bzw. das Stanzelement zum Entfernen des Schulterabfalls betätigt wird. Im Rahmen der Erfindung gelingt folglich eine Positionierung der zweiten Stanzvorrichtung und der zweiten Aufnahmevorrichtung, z.B. zum Entfernen des Griffabfalls, durch Verfahren des ersten Stanzarms und folglich während das erste Abfallteil, z.B. das Schulterabfallteil, von dem Hohlkörper entfernt wird, ohne dass im Zuge dieser Positionierung bereits eine Betätigung der zweiten Stanzvorrichtung oder Aufnahmevorrichtung erfolgen muss. Die Erfindung zeichnet sich folglich durch einen besonders kompakten Aufbau aus, der einen automatisierten Betrieb der erfindungsgemäßen Vorrichtung ermöglicht.

In bevorzugter Ausführungsform ist an den Stanzarm der ersten und/oder zweiten Stanzvorrichtung zumindest ein Stanzelement angeschlossen. Bei dem Stanzelement kann es sich um eine Stanzplatte, ein Stanzprofil, einen Stanzstempel oder dergleichen handeln. Die erste Aufnahmevorrichtung und/oder die zweite Aufnahmevorrichtung können einen oder mehrere Aufnahmedorne als Aufnahmeelemente aufweisen, welche das Abfallteil im Zuge des Aufnehmens durchdringen. Dabei sind die Aufnahmedorne vorzugsweise endseitig an Aufnahmearme oder Aufnahmeträger (z.B. Aufnahmeplatten) angeordnet. Im Zuge des Entfernens der jeweiligen Abfallteile werden diese folglich von den Stanzarmen bzw. den Stanzelementen gegen den jeweiligen Aufnahmearm oder Aufnahmeträger gedrückt bzw. geschoben und gleichsam auf die Aufnahmedorne aufgesteckt bzw. aufgespießt. Ein unkontrolliertes Herabfallen der Abfallteile wird zuverlässig und auf besonders einfache Weise verhindert. In abgewandelter Ausführungsform besteht alternativ oder ergänzend aber auch die Möglichkeit, dass als Aufnahmeelemente Ansaugelemente verwendet werden.

Zum Verfahren der Aufnahmeelemente, z.B. Aufnahmedorne weisen die erste und/oder die zweite Aufnahmevorrichtung jeweils zumindest einen Aufnahmestelltrieb auf. Der Aufnahmestelltrieb der ersten Aufnahmevorrichtung ist vorzugsweise so ausgebildet, dass er ein im Wesentlichen lineares und bevorzugt horizontales Verfahren der Aufnahmeelemente ermöglicht. Auch der Aufnahmestelltrieb der zweiten Aufnahmevorrichtung ermöglicht ein im Wesentlichten lineares Verfahren der Aufnahmeelemente. Dabei ist jedoch von besonderer Bedeutung, dass der zweite Aufnahmearm der zweiten Aufnahmevorrichtung unter einem vorgegebenen Winkel von z.B. 10° bis 90° gegenüber dem ersten Stanzarm angeordnet ist. Dementsprechend ist dann auch der zugeordnete Stelltrieb angeordnet. Der Winkel zwischen dem zweiten Aufnahmearm und dem ersten Stanzarm beträgt vorzugsweise 20° bis 60°, besonders bevorzugt 30° bis 50°, z.B. ca. 35°. Der Aufnahmearm kann aber auch in im Wesentlichen vertikaler Orientierung angeordnet und/oder in im Wesentlichen vertikaler Orientierung verfahrbar sein. Bei den Aufnahmearmen kann es sich um Aufnahmestangen oder -stäbe handeln, an denen endseitig die Aufnahmeelemente, z. B. Aufnahmedorne, angeordnet sind. Der Aufnahmearm kann aber auch endseitig unter Bildung einer Aufnahmetasche für das Abfallteil als Winkelprofil ausgebildet sein. Innerhalb der Aufnahmetasche können dann die Aufnahmeelemente, z. B. Dorne und/oder Saugelemente, angeordnet sein, Bei einer solchen Ausführungsform wird das z. B. zweite Abfallteil mit dem Stanzarm gleichsam in die Aufnahmetasche gedrückt und zuverlässig von den Aufnahmeelementen aufgenommen. Das Abstreifen kann dabei mit Blasluft erfolgen, wobei z. B. auch ein kombiniertes Saug- und Blaselement vorgesehen sein kann.

Der ersten Stanzvorrichtung und/oder der zweiten Stanzvorrichtung sind jeweils zumindest ein Stanzstelltrieb zum Verfahren oder Verschwenken des Stanzarmes bzw. der Stanzelemente zugeordnet. Der Stanzstelltrieb der ersten Stanzvorrichtung ist dabei für ein im Wesentlichen horizontales Verfahren des Stanzarmes ausgerichtet. Demgegenüber ist der Stanzstelltrieb der zweiten Stanzvorrichtung so eingerichtet, dass deren Stanzarm zum Trennen und Abgeben des Abfallteils verschwenkt wird. Dazu kann der Stanzstelltrieb als Rotationsantrieb, z.B. elektromotorischer Antrieb ausgebildet sein. Ein derartiger Antrieb kann unmittelbar oder über ein Getriebe auf die Drehachse des schwenkbar gelagerten Stanzarmes wirken. Nach bevorzugter Ausführungsform ist der Stanzstelltrieb als Linearstelltrieb, z.B. Zylinderkolbenanordnung oder Spindeltrieb ausgebildet. Bei den Zylinderkolbenanordnungen kann es sich im Rahmen der Erfindung um pneumatisch oder hydraulisch wirkende Zylinderkolbenanordnungen handeln. Dabei kann der Stanzarm unter Zwischenschaltung eines Übertragungshebels an den Stelltrieb angeschlossen sein. Dieser Übertragungshebel ist vorzugsweise drehfest mit dem Stanzarm verbunden. Um eine einwandfreie Betätigung des Stanzarmes zu ermöglichen ist es zweckmäßig, wenn der Linearstelltrieb, z.B. die Zylinderkolbenanordnung schwenkbar an einem Stanzgestell befestigt ist. Der Stanzarm kann im Wesentlichen L-förmig oder C-förmig oder als winkelförmiger bzw. gekrümmter Hebel ausgebildet sein. Diese Formen erlauben in besonders einfacher Weise ein Durchgreifen des Griffes bzw. ein Eintauchen in die Griffmulde zum Ausstanzen des Griffabfalls.

In zweckmäßiger Weiterbildung schlägt die Erfindung vor, dass die Aufnahmearme und/oder Aufnahmeelemente der zweiten Aufnahmevorrichtung in einem Führungselement, z.B. einer Führungsplatte geführt sind, welche an den Stanzarm und/ oder die Stanzplatte der ersten Stanzvorrichtung angeschlossen ist. Dabei kann dieses Führungselement zugleich als Abstreifelement für das zweite Abfallteil, z.B. Griffabfallteil ausgebildet sein. In diesem Zusammenhang ist auch eine Kombination der ersten Stanzplatte mit diesem Führungselement möglich, so dass die Stanzplatte für das erste Abfallteil zugleich als Abstreifelement für das zweite Abfallteil dient. Ferner schlägt die Erfindung vor, dass der Stanzarm der ersten Stanzvorrichtung an ein mit dem Stanzstelltrieb verfahrbares Trägerelement angeschlossen ist, wobei die zweite Stanzvorrichtung und/oder die zweite Aufnahmevorrichtung zumindest teilweise an das Trägerelement angeschlossen sind. Im Zuge des Verfahrens des Stanzarmes der ersten Stanzvorrichtung werden im Rahmen der Erfindung folglich die zweite Stanzvorrichtung und die zweite Aufnahmevorrichtung gleichzeitig in Position oberhalb des Hohlkörpers gebracht, um nach dem Entfernen des ersten Abfallteiles mit dem ersten Stanzelement sogleich das Entfernen des zweiten Abfallteils mit dem zweiten Stanzelement zu ermöglichen. Dieses gelingt durch geeignete unmittelbare oder mittelbare Befestigung und Positionierung der zweiten Stanzvorrichtung und der zweiten Aufnahmevorrichtung an dem Stanzarm der ersten Stanzvorrichtung.

Nach einem weiteren Vorschlag der Erfindung weist zumindest die erste Aufnahmevorrichtung zumindest ein horizontal verfahrbares Presselement, z.B. eine Pressplatte, ein Pressprofil, ein Pressstempel oder dergleichen auf. Dieses Presselement ist mittels zumindest eines Pressstelltriebes relativ zu dem Aufnahmeelement, z.B. dem Aufnahmedorn gegen das Abfallteil und/oder gegen das Stanzelement verfahrbar. Auf die Weise besteht die Möglichkeit, das erste Abfallteil zunächst durch Vorfahren einerseits des Stanzelementes und andererseits des Presselementes zwischen diesen beiden gleichsam als Halteelement funktionierenden Bauteilen zu fixieren, bevor das Abfallteil von dem Behälter abgetrennt wird. Dieses Fixieren bzw. Pressen führt zunächst zu einer Verfestigung des Abfallteils. Im Übrigen besteht die Möglichkeit, in dieser Arbeitsstellung den Blasdorn aus der beispielsweise neben dem Griffbereich des Hohlkörpers und damit in der Nähe des Abfallsteils angeordneten Behälteröffnung zu entfernen, ohne dass die Gefahr besteht, dass das Abfallteil von dem Blasdorn unkontrolliert mitgerissen wird. Schließlich ermöglicht diese Fixierung ein störungsfreies Einfahren der Aufnahmedorne bzw. Spieße in das Abfallteil bzw. ein kontrolliertes Aufstecken des Abfallteils auf die Aufnahmedorne mit Hilfe der Stanzvorrichtung. Wird das Abfallteil durch Vorfahren des Stanzelementes auf die Aufnahmedorne aufgesteckt, so versteht es sich, dass das Presselement bzw. die Pressplatte zuvor oder zugleich bzw. synchron mit dem Stanzelement zurückgefahren wird. Besonders vorteilhaft ist eine Ausführungsform der Erfindung, bei welcher die Stanzelemente und/oder das Presselement zugleich als Kühlelemente, z.B. Kühlplatten mit Kühlmittelzufuhr zum Kühlen des Abfallteils vor dem Lösen ausgebildet sind. Durch die Presswirkung und/oder die Kühlwirkung von Stanzelement und Presselement wird folglich eine Verfestigung des Abfallteils erzielt, bevor das Abfallteil von dem Hohlkörper gelöst wird. Dabei kann mit Wasserkühlung oder Luftkühlung gearbeitet werden, d.h. als Kühlmittelzufuhr dienen entsprechende Kühlluftleitungen oder Kühlwasserleitungen. Stanzelement und/oder Presselement können dabei unmittelbar gekühlt sein, z. B. mit integrierten Kühlmittelkanälen. Die Elemente können aber auch extern mit Kühlluft beaufschlagt werden, d. h. die Kühlluftaustritte sind an einem separaten Bauteil angeordnet und auf die Elemente gerichtet.

In zweckmäßiger Weiterbildung der Erfindung ist das Presselement, z.B. die Pressplatte, zugleich als Abstreifelement, d.h. als Press- und Abstreifelement zum Abstreifen des abgetrennten, ersten Abfallteiles von den Aufnahmedornen ausgebildet. Dem Presselement kommt folglich gleichsam doppelte oder sogar dreifache Funktion zu. Einerseits lässt sich das erste Abfallteil mit der Pressplatte gegen die Stanzplatte pressen und folglich fixieren. Außerdem kann die Pressplatte als Kühlplatte zum Kühlen des Abfallteils dienen. Schließlich kann mit Hilfe der Pressplatte in ihrer Funktion als Abstreifplatte die Übergabe des ersten Abfallteils von der ersten Aufnahmevorrichtung an das Förderband realisiert werden. Als Abstreifelement kann aber auch ein Blaselement verwendet werden.

Im Folgenden wird die Erfindung anhand einer lediglich ein Ausführungsbeispiel darstellenden Zeichnung näher erläutert. Es zeigen:
- Fig. 1: eine erfindungsgemäße Vorrichtung zum kombinierten Entfernen von Schulterabfallteilen und Griffabfallteilen in einer schematischen Seitenansicht,
- Fig. 2: den Gegenstand nach Fig. 1 in einer anderen Funktionsstellung,
- Fig. 3: den Gegenstand nach Fig. 1 in einer weiteren Funktionsstellung,
- Fig. 4: den Gegenstand nach Fig. 1 in einer weiteren Funktionsstellung,
- Fig. 5: den Gegenstand nach Fig. 1 in einer weiteren Funktionsstellung,
- Fig. 6: den Gegenstand nach Fig. 1 in einer weiteren Funktionsstellung,
- Fig. 7: den Gegenstand nach Fig. 1 in einer weiteren Funktionsstellung,
- Fig. 8: den Gegenstand nach Fig. 1 in einer schematischen Draufsicht.

In den Figuren ist eine Vorrichtung zum Entfernen von Abfallteilen 1a, 1b bzw. Materialresten von einem geformten Hohlkörper 2 dargestellt, wobei die Abfallteile 1a, 1b im Zuge des Formens des Hohlkörpers 2 aus thermoplastischem Kunststoff an dem Hohlkörper 2 entstehen. Das Formen des Hohlkörpers erfolgt in einem nicht dargestellten Formwerkzeug, z. B. in einem vorangehenden Arbeitsschritt in einer separaten Formstation. Bei dem Hohlkörper 2 handelt es sich im Ausführungsbeispiel um einen Behälter bzw. Kanister mit Griff 4 und Einfüllöffnung 5. Die dargestellte Vorrichtung dient zum Entfernen von einerseits dem oberhalb des Griffes 4 oder neben dem Griff angeformten Schulterabfall 1 a sowie andererseits dem innerhalb des Griffes 4 bzw. der Griffmulde 6 angeformten bzw. eingeformten sog. Griffabfall 1 b. Die Abfallteile 1a, 1b sind über verhältnismäßig dünne Materialbrücken mit dem geformten Hohlkörper 2 verbunden. Das Formwerkzeug bzw. Blaswerkzeug, in welches der schlauchförmige Vorformling durch Druckluft angeformt wird, ist in den Figuren nicht gezeigt. Zum Einbringen der Druckluft in den Vorformling dient z. B. ein in den Figuren ebenfalls nicht dargestellter Blasdorn.

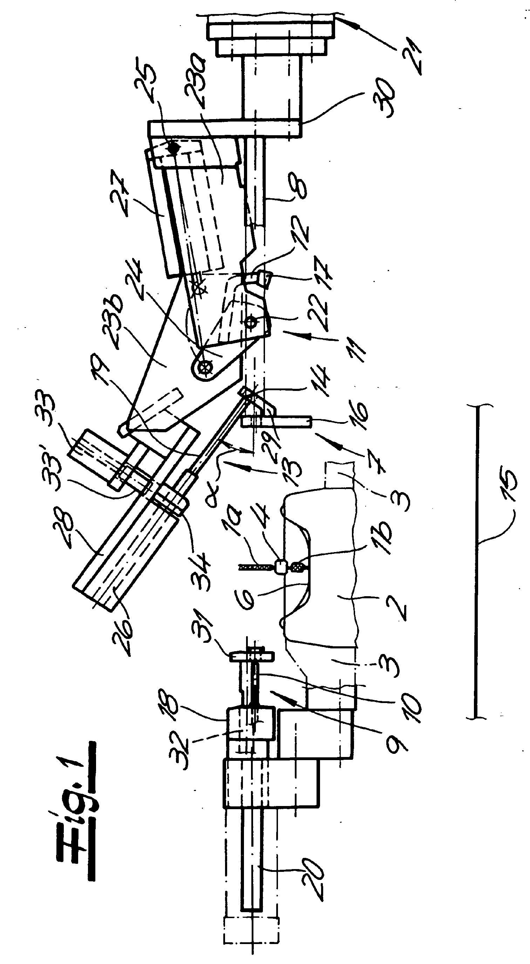

Fig. 1 zeigt die erfindungsgemäße Vorrichtung in einer ersten Funktionsstellung nach dem Blasformen. Der Behälter wird von einer z. B. mehrteiligen Haltemaske 3 gehalten. Oberhalb-des geformten Behälters 2 ist der über den Materialsteg bzw. die Materialbrücke mit dem Behälter verbundene Schulterabfall 1 a erkennbar. Innerhalb des Griffbereiches des geformten Behälters 2 ist ferner der über Materialstege mit dem Behälter verbundene Griffabfall 1b erkennbar. Die Vorrichtung weist zunächst eine erste Stanzvorrichtung 7 mit Stanzarmen 8 zum trennen des Schulterabfallteils 1 a von dem Hohlkörper 2 sowie eine erste Aufnahmevorrichtung 9 mit Aufnahmeelementen 10 zum Aufnehmen des abgetrennten Schulterabfallteils 1 a auf. Dabei sind die Aufnahmeelemente 10 und die Stanzarme 8 zum Trennen und Aufnehmen des Schulterabfallteils 1a gegeneinander verfahrbar.

Ferner weist die Vorrichtung eine zweite Stanzvorrichtung 11 mit einem Stanzarm 12 zum Trennen des Griffabfallteils 1b von dem Hohlkörper 2 sowie eine zweite Aufnahmevorrichtung 13 mit Aufnahmeelementen 14 zum Aufnehmen des abgetrennten Griffabfallteils 1b auf. Dabei ist dieser Stanzarm 12 schwenkbar gelagert und zum Trennen und Abgeben des Griffabfallteils 1b an die Aufnahmeelemente 14 gegen das Griffabfallteil 1b und die Aufnahmeelemente 14 schwenkbar. Ferner ist eine Sammel- und/oder Abführeinrichtung 15 für die Abfallteile vorgesehen. Die Sammel- und/oder Abführvorrichtung für die abgetrennten Abfallteile ist als Förderband 15 ausgebildet, wobei die jeweiligen Aufnahmevorrichtung 9 bzw. 13 die abgetrennten Abfallteile 1 a bzw. 1b an dem Behälter 2 vorbei auf das Förderband 15 abwerfen. Die Laufrichtung bzw. Transportrichtung T des Transportbandes 15 ist dabei im Wesentlichen senkrecht bzw. quer zur Arbeitsrichtung der Stanzvorrichtung 7.

Eine vergleichende Betrachtung der Figuren zeigt, dass die erste Stanzvorrichtung 7 für das Schulterabfallteil 1a mit der zweiten Stanzvorrichtung 11 und der zweiten Aufnahmevorrichtung 13 für das Griffabfallteil 1b gekoppelt ist. Dazu sind die zweite Stanzvorrichtung 11 und die zweite Aufnahmevorrichtung 13 an die Stanzarme bzw. das Stanzelement der ersten Stanzvorrichtung 7 angeschlossen und folglich gemeinsam mit diesen Stanzarmen 8 verfahrbar.

An die Stanzarme 8 der ersten Stanzvorrichtung 7 ist ein Stanzelement 16 angeschossen. Bei diesem ersten Stanzelement 16 handelt es sich insoweit um eine endseitig an die Stanzarme 8 angeschlossene Stanzplatte 16. An den Stanzarm 12 der zweiten Stanzvorrichtung 11 ist ebenfalls ein Stanzelement 17 angeschlossen. Dieses Stanzelement des zweiten Stanzarmes 12 ist gleichsam als Stanzstempel 17 ausgebildet. Die beiden Aufnahmevorrichtungen 9, 13 weisen jeweils zwei Aufnahmedorne 10 bzw. 14 als Aufnahmeelemente auf, welche die jeweiligen Abfallteile 1a, 1b im Zuge des Aufnehmens durchdringen. Bei der ersten Aufnahmevorrichtung 9 sind die Aufnahmedorne 10 an eine gemeinsame, verfahrbare Aufnahmeplatte als Aufnahmeträger 18 angeschlossen. Die Aufnahmedorne 14 der zweiten Aufnahmevorrichtung 13 sind jeweils endseitig an Aufnahmearme 19 angeschlossen. Zum im Wesentlichen horizontalen Verfahren der Aufnahmedorne 10 der ersten Aufnahmevorrichtung 9 (für den Schulterabfall) ist ein erster Aufnahmestelltrieb 20 vorgesehen. Die erste Stanzvorrichtung 7 weist einen nicht detailliert dargestellten ersten Stanzstelltrieb 21 zum im Wesentlichen horizontalen Verfahren der Stanzarme bzw. der Stanzplatte auf. Folglich lassen sich durch Betätigen von Aufnahmestelltrieb 20 und/oder Stanzstelltrieb 21 die Aufnahmedorne 10 und die Stanzplatte 16 gegeneinander verfahren. Dabei arbeiten diese Stelltriebe 20, 21 im Wesentlichen in einer horizontalen Ebene. Stanzplatte 16 und Aufnahmedorne 10 arbeiten dabei aus entgegengesetzten Richtungen gegeneinander bzw. auf das Schulterabfallteil 1 a. Die einzelnen Stelltriebe 20, 21 sind jeweils als z.B. pneumatisch arbeitende Zylinderkolbenanordnungen ausgebildet.

Der Stanzarm 12 der zweiten Stanzvorrichtung 11 (zum Abtrennen des Griffabfalls) ist um eine Stanzachse 22 schwenkbar an einem Stanzgestell 23a, 23b gelagert und zum Trennen und Abgeben des Griffabfallteils 1b an die entsprechenden Aufnahmearme 19 gegen das Abfallteil 1b und gegen diese Aufnahmearme 19 schwenkbar. Dazu ist der Stanzarm 12 im Wesentlichen L-förmig ausgebildet und mittelbar an einen Stanzstelltrieb 27 angeschlossen. Dieser Stanzstelltrieb 27 ist ebenfalls als Linearstelltrieb, nämlich als Zylinderkolbenanordnung ausgebildet. Der Stanzarm 12 ist unter Zwischenschaltung eines Übertragungshebels 24 an den Stelltrieb 27, nämlich an dessen Kolben, angeschlossen. Übertragungshebel 24 und Stanzarm 12 sind dabei drehfest miteinander verbunden, z.B. verschraubt oder verschweißt. Der Übertragungshebel 24 selbst ist über ein Drehgelenk drehbar endseitig an den Kolben der Zylinderkolbenanordnung 27 angeschlossen. Im Übrigen ist auch die Zylinderkolbenanordnung 27 selbst schwenkbar gelagert. Dazu ist der Stanzzylinder über die Schwenkachse 25 schwenkbar an dem Stanzgestell 23a, 23b befestigt. Die Aufnahmearme 19 der zweiten Aufnahmevorrichtung 13 sind im Ausführungsbeispiel unter einem vorgegebenen Winkel α von z.B. 35° gegenüber den Stanzarmen 8 der Stanzvorrichtung 7 angeordnet. Dazu ist ein entsprechender zweiter Aufnahmestelltrieb 26 an einem Träger 28 befestigt, der wiederum mit dem Stanzgestell 23a, 23b der zweiten Stanzvorrichtung 11 verbunden ist. Das Stanzgestell weist einen ersten Gestellträger 23a auf, an dem z.B. der Stanzstelltrieb 27 und der Übertragungshebel 24 angeordnet sind sowie einen mit dem ersten Gestellträger 23a verbundenen zweiten Gestellträger 23b, an den dann der Träger 28 für den Stelltrieb 26 angeschlossen ist. Diese Einheit wird insgesamt mit den Stanzarmen 8 der ersten Stanzvorrichtung 7 verfahren. Die Aufnahmearme 19 der zweiten Aufnahmevorrichtung 13 sind in einem gemeinsamen Führungselement 29, z.B. einer Führungsplatte 29 geführt, welche an die Stanzplatte 16 der ersten Stanzvorrichtung 7 angeschlossen ist. Dazu weist die Führungsplatte 29 zwei mit den Aufnahmearmen 19 fluchtende Führungsdurchbrechungen auf. Dabei ist das Führungselement 29 zugleich als Abstreifelement 29 für das zweite Abfallteil 1 b ausgebildet. Im Übrigen sind die Stanzarme 8 an ein gemeinsames und mit dem ersten Stanzstelltrieb 21 verfahrbares Trägerelement 30 angeschlossen. An dieses Trägerelement 30 ist außerdem das Stanzgestell 23a, 23b der zweiten Stanzvorrichtung 11 angeschlossen, an welches dann der Träger 28 der zweiten Aufnahmevorrichtung 13 angeschlossen ist, so dass insgesamt die beschriebene Kopplung erreicht wird.

Ferner ist in den Figuren erkennbar, dass die erste Aufnahmevorrichtung 9 ein im Wesentlichen ebenfalls horizontal verfahrbares Presselement 31 in Form einer vertikal orientierten Pressplatte 31 aufweist, wobei die Pressplatte 31 mittels eines Pressstelltriebes 32 relativ zu den Aufnahmedornen 10 und gegen das Abfallteil 1 a und/oder gegen das Stanzelement 16 verfahrbar ist. Auch der Pressstelltrieb 32 ist als pneumatisch wirkende Zylinderkolbenanordnung ausgebildet und zwar mit Presszylinder und Presskolben. Sowohl die Stanzplatte 16 als auch die Pressplatte 31 weisen jeweils mit Aufnahmedornen 10 fluchtende Führungsdurchbrechungen, z.B. Führungsbohrungen auf, welche von den Aufnahmedornen 10 im Zuge des Trennens des Abfallteils bzw. im Zuge des Verfahrens der einzelnen Bauteile durchgriffen werden. Die Pressplatte 31 kann im Ausführungsbeispiel gekühlt werden. Dazu ist sie jedoch nicht selbst mit Kühlmittelkanälen oder einer Kühlmittelzufuhr versehen. Vielmehr sind an dem Aufnahmeträger 18 Luftaustritte angeordnet, die die Pressplatte mit Kühlluft beaufschlagen. Dabei sind eine Vielzahl von Luftaustritten über den Aufnahmeträger verteilt. Die Pressplatte weist dementsprechend eine Vielzahl von Durchbrechungen auch, die mit den Kühlluftaustritten des Aufnahmeträgers 18 fluchten. Auf diese Weise wird nicht nur die Pressplatte 31 gekühlt, vielmehr gelang die Kühlluft auch durch die fluchtenden Durchbrechungen (z. B. Bohrungen) unmittelbar auf das Abfallteil.

Die beschriebene Vorrichtung arbeitet vorzugsweise wie folgt:

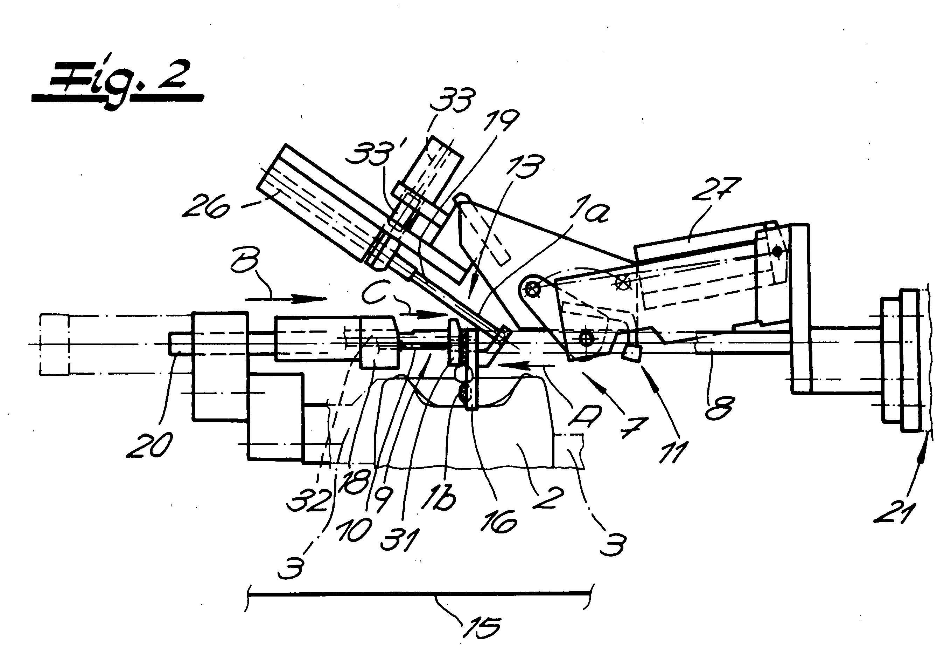

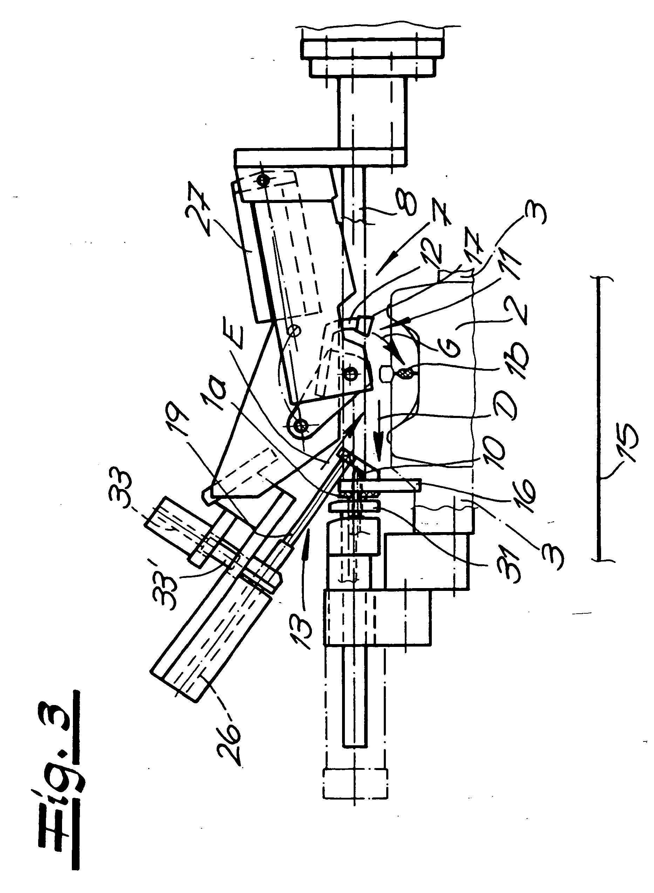

Nach dem Formen des Behälters in dem Formwerkzeug mit Hilfe des Blasdorns wird der Behälter in die in den Fig. dargestellte Station gebracht und von der Haltemaske 3 gehalten. Dann werden von der einen Seite (von rechts) die Stanzarme 8 mit der Stanzplatte 16 mit Hilfe des Stanzstelltriebes 21 soweit vorgefahren (Pfeil A), dass sie gegen das Schulterabfallteil 1 a anliegt. Außerdem wird die Pressplatte 31 durch Betätigung von einerseits Aufnahmestelltrieb 20 (Pfeil B) und andererseits Pressstelltrieb 32 (Pfeil C) von der gegenüberliegenden Seite (von links) soweit vorgefahren, dass die Pressplatte 31 ebenfalls gegen das Abfallteil 1a anliegt, so dass das Abfallteil 1a insgesamt zwischen Stanzplatte 16 einerseits und Pressplatte 31 andererseits fixiert ist. Diese Funktionsstellung ist in Fig. 2 dargestellt. Es ist erkennbar, dass die Pressplatte 31 über die Aufnahmedorne 10 hinaus relativ zu der Trägerplatte 18 vorgefahren ist, so dass die Aufnahmedorne 10 noch nicht zum Einsatz kommen. In dieser Funktionsstellung erfolgt nun zunächst eine (weitere) Verfestigung des Schulterabfallteils 1a. Bei Übergang von Fig. 2 zu Fig. 3 wird nun der Schulterabfall 1 a abgetrennt. Dazu wird die Stanzplatte 16 mit den Stanzarmen 8 um ein vorgegebenes Maß weiter in Richtung der Aufnahmedorne 10 vorgefahren (Pfeil D). Synchron dazu wird die Pressplatte 31 zurückgefahren. Im Zuge des Vorfahrens der Stanzplatte 16 wird das Schulterabfallteil 1a von dem Behälter 2 abgetrennt und auf die Aufnahmedorne 10 aufgesteckt. Bis zu diesem Zeitpunkt betrifft die Bearbeitung im Wesentlichen das Schulterabfallteil mittels erster Stanzvorrichtung 7 und erster Aufnahmevorrichtung 9.

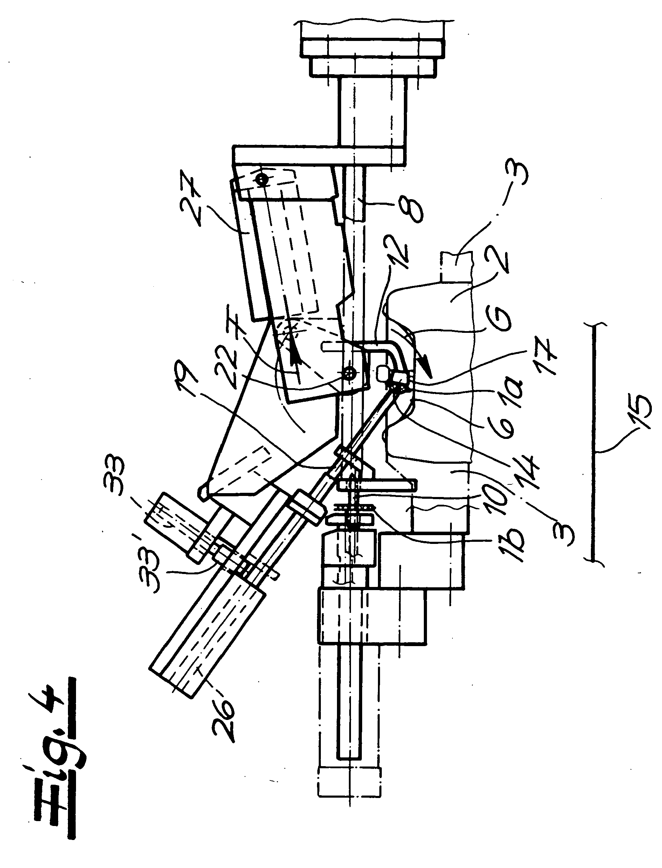

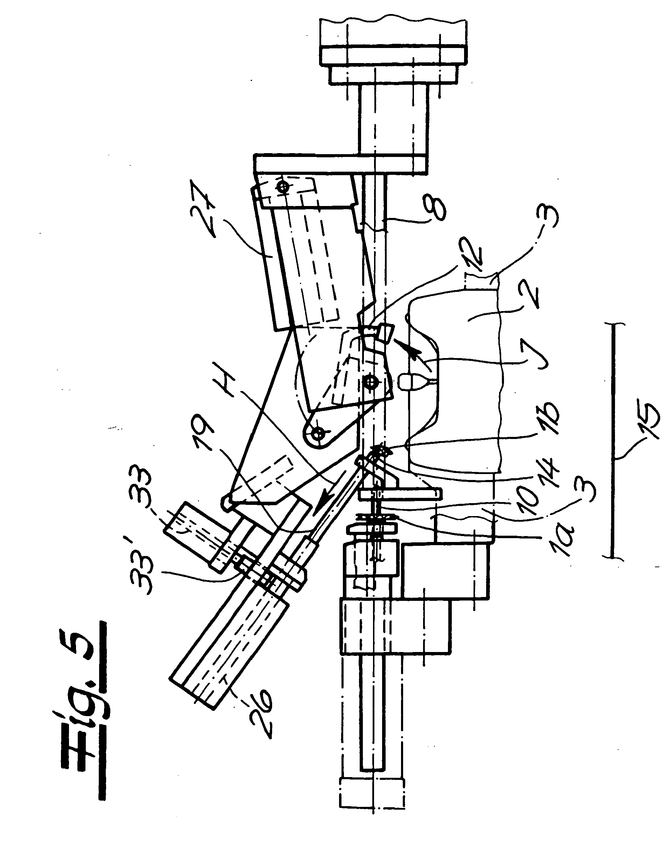

Nun zeigt eine vergleichende Betrachtung der Fig. 1 bis 3, dass mit dem Vorfahren der Stanzarme 8 im Zuge des Abtrennens des Schulterabfallteils 1a zugleich die für die Bearbeitung des Griffabfallteils 1b erforderlichen Aggregate 11, 13 in Position gebracht wurden, da sowohl die zweite Stanzvorrichtung 11 als auch die zweite Aufnahmevorrichtung 13 mit den Stanzarmen 8 gekoppelt sind. Den Ausgangspunkt für das Entfernen des Griffabfalls 1b bildet folglich die Funktionsstellung gemäß Fig. 3, in der sowohl der Stanzarm 12 als auch die Aufnahmearme 19 in Arbeitsposition aber noch gleichsam zurückgefahren in ihren Ausgangsstellungen sind. Nun werden einerseits die Aufnahmearme 19 durch Betätigen des Aufnahmestelltriebes 26 vorgefahren und in den Griffbereich gebracht (Pfeil E), andererseits wird im Wesentlichen synchron der Stanzstelltrieb 27 betätigt, indem der Kolben aus der in Fig. 3 dargestellten Position nach rechts in die in Fig. 4 dargestellte Position gebracht wird (Pfeil F). Dabei schwenkt der Stanzarm 12 um die Achse 22 in den Griffbereich bzw. in die Griffmulde 6 und gegen das Griffabfallteil 1b (Pfeil G). Das Griffabfallteil 1b wird mit dem Stanzstempel 17 im Zuge der Schwenkbewegung beim Durchgreifen des Griffes herausgedrückt und in den Bereich der Aufnahmearme 19 überführt und auf deren Aufnahmedorne 14 aufgesteckt. Diese Funktionsstellung ist in Fig. 4 dargestellt. Nun werden einerseits die Aufnahmearme 19 und andererseits der Stanzarm 12 durch umgekehrte Betätigung der jeweiligen Stelltriebe aus dem Griffbereich herausgefahren (Pfeile H und J). Das bedeutet, dass die Aufnahmearme 19 mit dem Abfallteil nach schräg oben aus dem Griffbereich herausgezogen werden und das auf die Aufnahmedorne 14 aufgesteckte Griffabfallteil 1b mitnehmen. Fig. 5 zeigt jedoch, dass die Aufnahmearme 19 noch nicht vollständig zurückgezogen werden. Denn im Bereich der Zylinderkolbenanordnung 26 ist eine Blockiervorrichtung 33 in Form einer weiteren Zylinderkolbenanordnung 33 vorgesehen, welche gemäß Fig. 4 in den Bereich des Aufnahmestelltriebes 26 eingefahren wurde und nun im Zuge des Zurückziehens der Aufnahmearme 19 deren vollständigen Rückzug verhindert. Dazu ist ein Anschlagflansch 34 zwischengeschaltet, der gegen den Blockierkolben 33' zur Anlage kommt. Bei der Blockiervorrichtung 33 handelt es sich insoweit um eine im Wesentlichen vertikal zu dem Aufnahmestelltrieb angeordnete Zylinderkolbenanordnung. Durch diese Anordnung wird ein vorzeitiges Abfallen bzw. Abstreifen des Griffabfallteils 1b durch das Abstreifelement 29 verhindert. Fig. 5 zeigt folglich eine Funktionsstellung, bei der sowohl das Schulterabfallteil 1a als auch das Griffabfallteil 1b noch von den jeweiligen Aufnahmedornen 10 bzw. 14 gehalten werden.

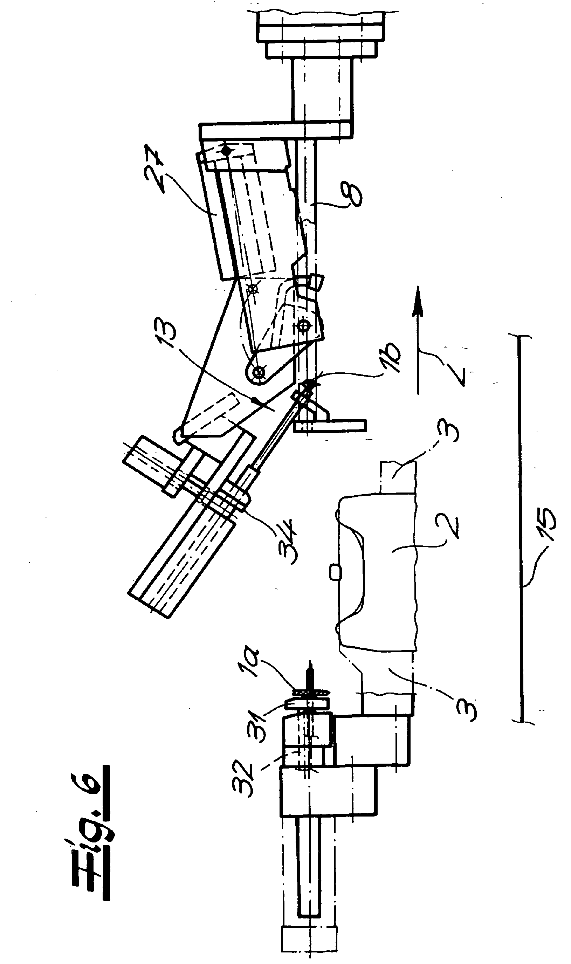

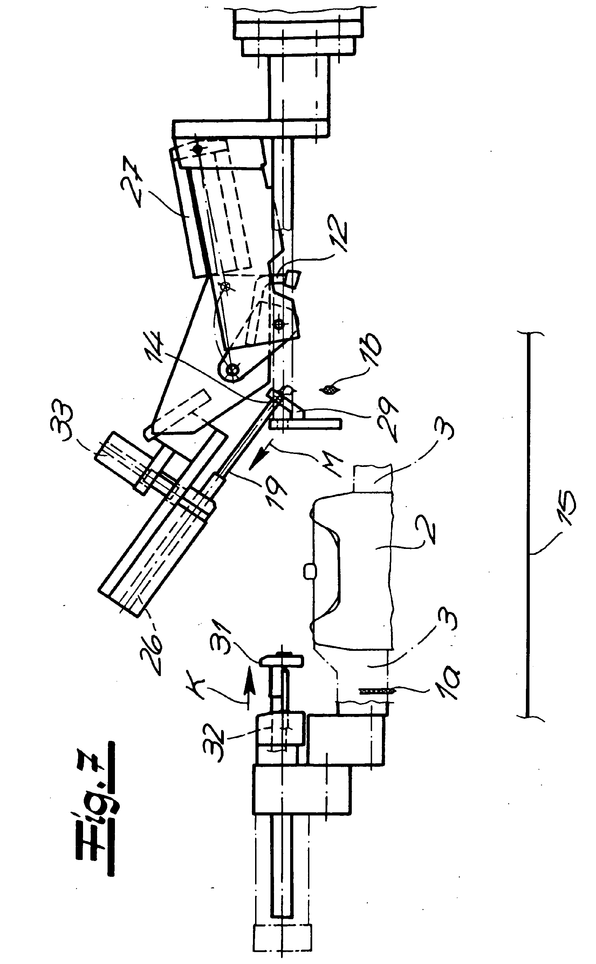

Nun werden die Stanzarme 8 mit der Aufnahmevorrichtung 13 gemäß Fig. 6 vollständig zurückgefahren (Pfeil L), so dass auch die zweite Aufnahmevorrichtung 13 mit dem Griffabfallteil 1b aus dem Bereich des Behälters entfernt wird. In dieser Funktionsstellung kann nun ein Abstreifen und folglich Abwerfen sowohl des Griffabfallteils 1b als auch des Schulterabfallteils 1 a erfolgen (vgl. Fig. 7). Zum Abwerfen des Schulterabfallteils 1a wird nun die Pressplatte 31, welche zugleich als Abstreifplatte dient, durch Betätigung des Pressstelltriebes 32 vorgefahren (Pfeil K) und zwar soweit, dass das Schulterabfallteil 1 a von den Aufnahmedornen 10 heruntergeschoben wird und auf das Förderband 15 fallen kann. Gleichzeitig (oder auch davor oder danach) können die Aufnahmearme 19 vollständig zurückgezogen werden (Pfeil M), indem der Blockierkolben 33' aus dem Bereich des Aufnahmestelltriebes 26 herausgefahren wird. Im Zuge des vollständigen Zurückfahrens wird das Griffabfallteil 1b mit Hilfe des Abstreifelementes 29 von den Aufnahmedornen 14 entfernt, so dass es ebenfalls auf das Förderband 15 fallen kann. Fig. 7 zeigt in diesem Zusammenhang, dass der Behälter 2 das Abwerfen der Abfallteile 1a, 1b nicht behindert. Die Haltemaske 3 kann dabei in ihrer eingefahrenen Position am Behälter 2 verbleiben. Es besteht aber auch die Möglichkeit, dass die Haltemaske 3 vor dem Abwerfen der Abfallteile zurückgefahren wird.

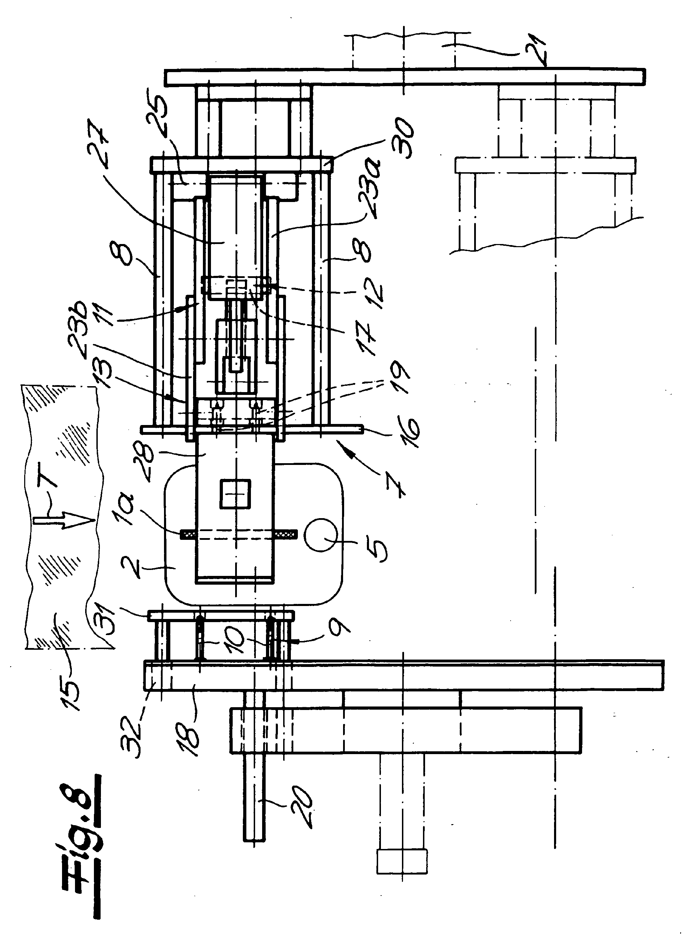

Fig. 8 zeigt schließlich, dass im Rahmen der Erfindung auch zwei oder mehrere der beschriebenen Aggregate in einer gemeinsamen Vorrichtung kombiniert werden können, so dass die simultane Bearbeitung mehrerer Hohlkörper erfolgen kann.

Alternativ oder ergänzend zu der beschriebenen Blockiervorrichtung 33 für den Stelltrieb 26 kann aber auch mit steuerbaren Stelltrieben gearbeitet werden, die ein kontrolliertes, mehrstufiges Vorfahren bzw. Zurückziehen ermöglichen.

Die beschriebene Vorrichtung eignet sich aber nicht nur für das Entfernen von Griffabfall und Schulterabfall, sondern auch für das kombinierte Entfernen anderer Abfallteile von bzw. an Hohlkörpern. Dabei kann es sich z. B. einerseits um einen außen am Hohlkörper angeordneten "Außenabfall" (der dem Schulterabfall entspricht) und andererseits um einen in einer (inneren) Durchbrechung angeordneten "Innenabfall" (der dem Griffabfall entspricht) handeln.

## Patentansprüche

1. Vorrichtung zum Entfernen von im Zuge des Formens von Hohlkörpern (2) aus thermoplastischem Kunststoff an den geformten Hohlkörpern (2) entstehenden Abfallteilen, insbesondere Schulterabfallteilen (1a) und Griffabfallteilen (1b),
mit einer ersten Stanzvorrichtung (7) mit zumindest einem Stanzarm (8) zum Trennen eines außen am Hohlkörper angeordneten ersten Abfallteils (1a), insbesondere Schulterabfallteils, von dem Hohlkörper (2),
mit einer ersten Aufnahmevorrichtung (9) mit zumindest einem Aufnahmeelement (10) zum Aufnehmen des abgetrennten ersten Abfallteils (1a),
wobei das erste Aufnahmeelement (10) der ersten Aufnahmevorrichtung (9) und der Stanzarm (8) der ersten Stanzvorrichtung (7) zum Trennen und Aufnehmen des ersten Abfallteils (1a) gegeneinander verfahrbar sind,
sowie mit einer zweiten Stanzvorrichtung (11) mit zumindest einem Stanzarm (12) zum Trennen eines in einer Durchbrechung des Hohlkörpers angeordneten zweiten Abfallteils (1b), insbesondere Griffabfallsteils, von dem Hohlkörper,
mit einer zweiten Aufnahmevorrichtung (13) mit zumindest einem Aufnahmeelement (14) zum Aufnehmen des abgetrennten zweiten Abfallteils (1b),
wobei der Stanzarm (12) der zweiten Stanzvorrichtung (11) schwenkbar gelagert und zum Trennen und Abgeben des Abfallteils (1b) an das Aufnahmeelement (14) der zweiten Aufnahmevorrichtung (13) gegen das Abfallteil (1b) und das Aufnahmeelement (14) schwenkbar ist,
und ferner mit zumindest einer Sammel- und/oder Abführeinrichtung (15) für die Abfallteile (1a, 1b), an welche die Abfallteile von den Aufnahmevorrichtungen (9, 13) abgegeben werden.

2. Vorrichtung nach Anspruch 1, wobei die Sammel- und/oder Abführvorrichtung für die abgetrennten Abfallteile als Förderband (15) ausgebildet ist und die Aufnahmevorrichtung die abgetrennten Abfallteile auf das Förderband abwirft.

3. Vorrichtung nach einem der Ansprüche 1 bis 2, wobei an die Stanzarme (8) der ersten und/oder zweiten Stanzvorrichtung (7, 11) jeweils ein Stanzelement (16, 17) angeschlossen ist.

4. Vorrichtung nach einem der Ansprüche 1 bis 3, wobei die zweite Stanzvorrichtung (11) und/oder die zweite Aufnahmevorrichtung (13) mit der ersten Stanzvorrichtung (7) und/oder der ersten Aufnahmevorrichtung (9) gekoppelt sind.

5. Vorrichtung nach Anspruch 4, wobei die zweite Stanzvorrichtung (11) und/oder die zweite Aufnahmevorrichtung (13) zumindest teilweise an den Stanzarm (8) und/oder das Stanzelement (16) der ersten Stanzvorrichtung (7) angeschlossen sind.

6. Vorrichtung nach einem der Ansprüche 1 bis 5, wobei das Stanzelement (16, 17) als Stanzplatte, Stanzprofil, Stanzstempel oder dergleichen ausgebildet sind.

7. Vorrichtung nach einem der Ansprüche 1 bis 6, wobei die erste und/oder die zweite Aufnahmevorrichtung (9, 13) einen oder mehrere Aufnahmedorne (10, 14) als Aufnahmeelemente aufweisen, welche das Abfallteil im Zuge des Aufnehmens durchdringen.

8. Vorrichtung nach Anspruch 7, wobei die Aufnahmedorne (14, 10) endseitig an Aufnahmearme (19) oder Aufnahmeträger (18) angeschlossen sind.

9. Vorrichtung nach einem der Ansprüche 1 bis 8, wobei die erste und/oder die zweite Aufnahmevorrichtung (9, 13) zumindest einen Aufnahmestelltrieb (20, 26) zum Verfahren der Aufnahmeelemente (10,14) z.B. Aufnahmedorne, aufweisen.

10. Vorrichtung nach einem der Ansprüche 1 bis 9, wobei die erste Stanzvorrichtung (7) und/oder die zweite Stanzvorrichtung (11) zumindest einen Stanzstelltrieb (21, 27) zum Verfahren oder Verschwenken der Stanzarme (8, 12) bzw. Stanzelemente (16, 17) aufweisen.

11. Vorrichtung nach einem Ansprüche 1 bis 10, wobei der Aufnahmearm (19) bzw. das Aufnahmeelement (14) der zweiten Aufnahmevorrichtung (13) unter einem vorgegeben Winkel (α) von 10° bis 90°, z.B. 20° bis 60°, vorzugsweise 30° bis 50° gegenüber dem Stanzarm (8) der ersten Stanzvorrichtung (7) angeordnet ist bzw. verfahrbar ist.

12. Vorrichtung nach einem der Ansprüche 1 bis 11, wobei der Aufnahmearm (19) und/oder der Aufnahmedorn (14) der zweiten Aufnahmevorrichtung (13) in einem Führungselement (29), z.B. einer Führungsplatte, geführt ist, welche an den Stanzarm (8) und/oder die Stanzplatte (18) der ersten Aufnahmevorrichtung (9) angeschlossen ist.

13. Vorrichtung nach Anspruch 12, wobei das Führungselement (29) als Abstreifelement für das zweite Abfallteil (1b) ausgebildet ist.

14. Vorrichtung nach einem der Ansprüche 1 bis 13, wobei der Stanzarm (8) und der ersten Stanzvorrichtung (7) an ein z.B. mit dem Stanzstelltrieb (21) verfahrbares Trägerelement (30) angeschlossen ist, wobei die zweite Stanzvorrichtung (11) und/oder die zweite Aufnahmevorrichtung (13) zumindest teilweise an das Trägerelement (30) angeschlossen sind.

15. Vorrichtung nach einem der Ansprüche 1 bis 14, wobei die erste Aufnahmevorrichtung (9) zumindest ein horizontal verfahrbares Presselement (31) aufweist, welches mittels eines Pressstelltriebes (32) relativ zu dem Aufnahmeelement (10) gegen das Abfallteil (1a) und/oder gegen das Stanzelement (16) verfahrbar ist.

16. Vorrichtung nach Anspruch 15, wobei das Presselement (31) als Pressplatte, Pressprofil oder dergleichen ausgebildet ist.

17. Vorrichtung nach einem der Ansprüche 1 bis 16, wobei die Stanzplatte (16) und/oder die Pressplatte (31) der ersten Aufnahmevorrichtung (9) mit den Aufnahmedornen (10) fluchtende Führungsdurchbrechungen aufweisen, welche von den Aufnahmedornen (10) im Zuge des Lösens des Abfallteils (1a) bzw. im Zuge des Verfahrens durchgriffen werden.

18. Vorrichtung nach einem der Ansprüche 1 bis 17, wobei das Presselement (31) der ersten Aufnahmevorrichtung (9) zugleich als Abstreifelement zum Abstreifen des Abfallteils (1a) von den Aufnahmedornen (10) ausgebildet ist.

19. Vorrichtung nach einem der Ansprüche 1 bis 17, wobei zumindest der zweiten Aufnahmevorrichtung (13) eine z.B. steuerbare Blockiervorrichtung(33) zugeordnet ist, welche nach dem Aufnehmen des zweiten Abfallteils ein vollständiges Zurückfahren des Aufnahmeelementes (19) verhindert.

## Claims

1. A device for the removal of waste parts which develop on the moulded hollow bodies (2) during the course of the moulding of hollow bodies (2) of thermoplastic, more preferably shoulder waste parts (1a) and handle waste parts (1 b),
with a first punching device (7) with at least one punching arm (8) for the severing of a first waste part (1a) arranged on the outside on a hollow body, more preferably shoulder waste part, from the hollow body (2),
with a first accommodating device (9) with at least one accommodating element (10) for accommodating the severed first waste part (1a),
wherein the first accommodating element (10) of the first accommodating device (9) and the punching arm (8) of the first punching device (7) for the severing and accommodating of the first waste part (1a) can be moved relative to one another,
as well as with a second punching device (11) with at least one punching arm (12) for the severing of a second waste part (1b) arranged in a perforation of the hollow body, more preferably handle waste part from the hollow body,
with a second accommodating device (13) with at least one accommodating element (14) for accommodating the severed second waste part (1b),
wherein the punching arm (12) of the second punching device (11) is swivel-mounted and for severing and passing on the waste part (1b) to the accommodating element (14) of the second accommodating device (13) can be swivelled towards the waste part (1b) and the accommodating element (14),
and in addition with at least one collecting and/or discharge device (15) for the waste parts (1a, 1b), to which the waste parts are passed by the accommodating devices (9, 13).

2. The device according to claim 1, wherein the collecting and/or discharge device for the severed waste parts is designed as a belt conveyor (15) and the accommodating device drops the severed waste parts on to the belt conveyor.

3. The device according to any one of the claims 1 or 2, wherein a punching element (16, 17) each is connected to the punching arms (8) of the first and/or second punching device (7, 11).

4. The device according to any one of the claims 1 to 3, wherein the second punching device (11) and/or the second accommodating device (13) are coupled with the first punching device (7) and/or the first accommodating device (9).

5. The device according to claim 4, wherein the second punching device (11) and/or the second accommodating device (13) are at least partly connected to the punching arm (8) and/or the punching element (16) of the first punching device (7).

6. The device according to any one of the claims 1 to 5, wherein the punching element (16, 17) is designed as punching plate, punching profile, punching ram or similar.

7. The device according to any one of the claims 1 to 6, wherein the first and/or the second accommodating device (9, 13) has/have one or several accommodating mandrels (10, 14) as accommodating elements, which penetrate the waste part during the course of picking up.

8. The device according to claim 7, wherein the accommodating mandrels (14, 10) are connected at the end to accommodating arms (19) or accommodating carriers (18).

9. The device according to any one of the claims 1 to 8, wherein the first and/or the second accommodating device (9, 13) at least has/have an accommodating positioning drive (20, 26) for moving the accommodating elements (10, 14) e.g. accommodating mandrels.

10. The device according to any one of the claims 1 to 9, wherein the first punching device (7) and/or the second punching device (11) has/have at least one punching positioning drive (21, 27) for the moving or swivelling of the punching arms (8, 12) or punching elements (16, 17).

11. The device according to any one of the claims 1 to 10, wherein the accommodating arm (19) or the accommodating element (14) of the second accommodating device (13) is arranged or moveable under a predetermined angle (α) of 10° to 90°, e.g. 20° to 60°, preferentially 30° to 50° relative to the punching arm (8) of the first punching device (7).

12. The device according to any one of the claims 1 to 11, wherein the accommodating arm (19) and/or the accommodating mandrel (14) of the second accommodating device (13) is guided in a guide element (29) e.g. a guide plate, which is connected to the punching arm (8) and/or the punching plate (18) of the first accommodating device (9).

13. The device according to claim 12, wherein the guide element (29) is designed as a stripping element for the second waste part (1b).

14. The device according to any one of the claims 1 to 13, wherein the punching arm (8) and the first punching device (7) are connected to a carrier element (30) that can be moved for example with the punching positioning drive (21), wherein the second punching device (11) and/or the second accommodating device (13) are at least partly connected to the carrier element (30).

15. The device according to any one of the claims 1 to 14, wherein the first accommodating device (9) has at least a horizontally moveable press element (31) which can be moved by means of a press positioning drive (32) relative to the accommodating element (10) against the waste part (1a) and/or against the punching element (16).

16. The device according to claim 15, wherein the press element (31) is designed as pressing plate, pressing profile or such like.

17. The device according to any one of the claims 1 to 16, wherein the punching plate (16) and/or the pressing plate (31) of the first accommodating device (9) have guide perforations which are aligned with the accommodating mandrels (10), which during the course of releasing the waste part (1a) or within the course of the method are reached through by the accommodating mandrels (10).

18. The device according to any one of the claims 1 to 17, wherein the pressing element (31) of the first accommodating device (9) is simultaneously designed as stripping element for the stripping of the waste part (1a) from the accommodating mandrels (10).

19. The device according to any one of the claims 1 to 17, wherein a for example controllable blocking device (33) is assigned to the second accommodating device (13), which after the picking up of the second waste part prevents a complete retraction of the accommodating element (19).

## Revendications

1. Dispositif pour l'élimination de parties de rebut se produisant au cours de la formation de corps creux (2) en matière thermoplastique sur les corps creux moulés (2), en particulier des parties de rebuts d'épaule (1a) et de parties de rebut de poignée (1b),
avec un premier dispositif de découpe (7) avec au mois un bras de découpe (8) pour la séparation d'une première partie de rebut (1a) disposée à l'extérieur sur le corps creux, en particulier d'une partie de rebut d'épaule, du corps creux (2), avec un premier dispositif de réception (9) avec au moins un élément de réception (10) pour la réception de la première partie de rebut séparée (1a),
le premier élément de réception (10) du premier dispositif de réception (9) et le bras de découpe (8) du premier dispositif de coupe (7) étant mobiles l'un par rapport à l'autre pour le sectionnement et la réception de la première partie de rebut (1a),
avec un second dispositif de découpe (11) avec au moins un bras de découpe (12) pour le sectionnement d'une seconde partie de rebut (1b) disposée dans une traversée du corps creux, en particulier une partie de rebut de poignée, du corps creux,
avec un second dispositif de réception (13) avec au moins un élément de réception (14) pour la réception de la seconde partie de rebut sectionnée (1b),
le bras de coupe (12) du second dispositif de découpe (11) étant logé de manière pivotante et étant pivotant pour la séparation et la remise de la partie de rebut (1b) à l'élément de réception (14) du second dispositif de réception (13) en direction de la partie de rebut (1b) et de l'élément de réception (14),
et en outre avec au moins un dispositif de collecte et/ou d'évacuation (15) pour les parties de rebut (1a, 1b) auxquelles les parties de rebut sont délivrées par les dispositifs de réception (9, 13).

2. Dispositif selon la revendication 1, le dispositif d'évacuation et/ou de collection étant réalisé pour les parties de rebut sectionnées comme une bande transporteuse (15) et le dispositif de réception éjectant les parties de rebut séparées sur la bande transporteuse.

3. Dispositif selon l'une des revendications 1 à 2, sur les bras de coupe (8) du premier et/ou du second dispositif de découpe (7, 11), il est raccordé respectivement un élément de découpe (16, 17).

4. Dispositif selon l'une des revendications 1 à 3, le seconde dispositif de coupe (11) et/ou le second dispositif de réception (13) sont accouplés au premier dispositif de coupe (7) et/ou au premier dispositif de réception (9).

5. Dispositif selon la revendication 4, **caractérisé en ce que** le second dispositif de coupe (11) et/ou le second dispositif de réception (13) sont raccordés au moins partiellement au bras de découpe (8) et/ou à l'élément de découpe (16) du premier dispositif de découpe (7).

6. Dispositif selon l'une des revendications 1 à 5, l'élément de découpe (16, 17) étant réalisé en tant que plaque de découpe, profilé de découpe, poinçon de découpe ou similaire.

7. Dispositif selon l'une des revendications 1 à 6, le premier et/ou le second dispositif de réception (9, 13) présentant un ou plusieurs mandrins de réception (10, 14) en tant qu'éléments de réception qui traversent la partie de rebut au moment de la réception.

8. Dispositif selon la revendication 7, le mandrin de réception (14, 10) étant raccordé à une extrémité aux bras de réception (19) ou au support de réception (18).

9. Dispositif selon l'une des revendications 1 à 8, le premier et/ou le second dispositif de réception (9, 13) présentant pour le déplacement des éléments de réception (10, 14) par exemple des mandrins de réception au moins un actionneur de réception (20, 26) pour le déplacement des éléments de réception (10, 14).

10. Dispositif selon l'une des revendications 1 à 9, le premier dispositif de découpe (7) et/ou le second dispositif de découpe (11) présentant au moins un actionneur de découpe (21, 27) pour le déplacement ou le basculement des bras de découpe (8, 12), respectivement des éléments de découpe (16, 17).

11. Dispositif selon l'une des revendications 1 à 10, le bras de réception (19) respectivement l'élément de réception (14) du second dispositif de réception (13) étant mobile respectivement disposé selon un angle prédéterminé (α) compris entre 10° et 90, par exemple 20° et 60°, de préférence entre 30° et 50° par rapport au bras de découpe (8) du premier dispositif de découpe (7).

12. Dispositif selon l'une des revendications 1 à 11, le bras de réception (19) respectivement le mandrin de réception (14) du second dispositif de réception (13) étant guidé dans un élément de guidage (9), par exemple une plaque de guidage, qui est raccordée au bras de découpe (8) et/ou à la plaque de découpe (18) du premier dispositif de réception (8).

13. Dispositif selon la revendication 12, l'élément de guidage (29) étant réalisé comme élément racleur pour la seconde partie de rebut (1 b).

14. Dispositif selon l'une des revendications 1 à 13, le bras de découpe (8) et le premier dispositif de découpe (7) étant raccordés à un élément porteur (30) mobile par exemple avec l'actionneur de découpe (21) et le second dispositif de découpe (11) et/ou le second dispositif de réception (13) étant raccordés au moins à l'élément support (30).

15. Dispositif selon l'une des revendications 1 à 14, le premier dispositif de réception (9) présentant au moins un élément de pressage (31) mobile horizontalement, qui est mobile au moyen d'un actionneur de pressage (32) par rapport à l'élément de réception (10) en direction de la partie de rebut (1a) et/ou de l'élément de découpe (16).

16. Dispositif selon la revendication 15, l'élément de pressage (31) étant réalisé comme une plaque de pressage, un profilé de pressage ou similaire.

17. Dispositif selon l'une des revendications 1 à 16, la plaque de découpe (16) et/ou la plaque de pressage (31) du premier dispositif de réception (9) présentant des traversées de guidage qui sont alignées avec les mandrins de réception (10), et à travers lesquelles passent les mandrins de réception (10) au moment de détacher la partie de rebut (1a) respectivement au cours du processus.

18. Dispositif selon l'une des revendications 1 à 17, l'élément de pressage (31) du premier dispositif de réception (9) étant réalisé en même temps comme élément de raclage pour le raclage de la partie de rebut (1 a) des mandrins de réception (10).

19. Dispositif selon l'une des revendications 1 à 17, au moins le second dispositif de réception (13) étant associé à un dispositif de blocage par exemple commandable (33), qui empêche après la réception de la seconde partie de rebut un retour complet de l'élément de réception (19).
